# EUROPEAN PATENT APPLICATION

(11) **EP 4 610 034 A1**
(43) Date of publication of application: **03.09.2025**
(21) Application number: 24160397.6
(22) Date of filing: 28.02.2024
(51) Int. Cl.: B29C 73/02, B29C 73/10

(54) **METHOD AND REPAIR KIT FOR REPAIRING A SANDWICH STRUCTURE**

(71) Applicant: Airbus Operations GmbH, 21129 Hamburg (DE)
(72) Inventor: Grunenberg, Jan, Hamburg (DE); Benthien, Hermann, Hamburg (DE)

(57) **Abstract**

A Method and a repair kit (40) are provided for repairing a sandwich structure (10), in particular a floor panel in a vehicle (1), such as an aircraft, the sandwich structure (10) having a top layer (11) and a bottom layer (12) defining an intermediate space (14) between them which is at least partially filled out with a core material (13), the method comprising the steps of localizing a damaged section (D) of the sandwich structure (10), such as a hole in the top layer (11) and the underlying core material (13); removing the damaged section (D) to create a repair cavity (C) while preserving the bottom layer (12); filling up the repair cavity (C) with a filling material (21); covering the filled-up repair cavity (C) with a cover layer (23); and fixing the cover layer (23) by means of at least one fixing element (30) extending through the cover layer (23) and the filling material (21) and/or the core material (13) next to the filling material (21).

## Description

### Technical Field

The present disclosure relates to the field of repairing sandwich structures, which are commonly used in floors of large vehicles, such as aircrafts. In particular, the disclosure relates to a method for repairing a sandwich structure, in particular a floor panel in a vehicle, such as an aircraft, the sandwich structure having a top layer and a bottom layer defining an intermediate space between them which is at least partially filled out with a core material, and to a repair kit for repairing a sandwich structure, in particular a floor panel in a vehicle, such as an aircraft, the sandwich structure having a top layer and a bottom layer defining an intermediate space between them which is at least partially filled out with a core material.

### Technical Background

Methods for repairing sandwich structures, such as sandwich panels used as floor panels in vehicles, like aircrafts, are known from the prior art. Sandwich panels are widely used in aircraft construction due to their favourable ratio between the achievable stiffness and the weight. For example, floor panels that are constructed with sandwich panels have a honeycomb-shaped core structure and cover layers made of carbon fibre-and/or glass reinforced epoxy resins applied to both sides are used in passenger cabins or in cargo holds.

These floor panels, which form the floor above the floor frame of the aircraft fuselage cell, are usually individually tailored to each aircraft type. In addition, the floor panels in the so-called wet areas of the aircraft fuselage cell, for example in the area of sanitary facilities, kitchen facilities and in the entrance area to the passenger cabin, must be designed to be liquid-tight, which increases the installation effort. Even during normal flight operations of a passenger aircraft, the floor panels are exposed to high mechanical stresses in an often additionally chemically aggressive environment. High point loads are caused, for example, by the wheels of serving trolleys, rolling suitcases, certain shoe heels and falling objects.

Such high stresses and point loads may lead to perforation of the upper cover layer of the floor panel, and possibly to vertical indentation of the core structure in the damaged area. As a result of the indentation, the impregnation of the core structure may chip off, which severely impairs the mechanical stability of the floor panel. If the damaged area is not repaired promptly, the damage will expand and can lead to extensive destruction of the floor slab. Removing and replacing the affected floor panel is generally not possible on site ("in field") and would also involve excessive labour and material costs. In addition, due to the individually adapted floor panels, a large supply of these floor panels would have to be kept in storage for each aircraft type.

DE 10 2009 035108 B4, for example, refers to a method for the repair of a sandwich plate having a core structure, a top surface layer and a bottom surface layer and a plurality of honeycomb-shaped cells includes providing at least one penetrating drill hole in at least one of the top surface layer and the bottom surface layer above one of the plurality of honeycomb-shaped cells in a damaged region of the sandwich plate, injecting a stabilising material into the honeycomb-shaped cell, and filling the damaged region with a filler material.

Further permanent repair methods according to the prior art commonly involve the removal of the damaged floor panel. Then, in respective work-shops, hot bond repair methods may be applied, involving a removal of the damaged section, applying a forming adhesive film or adhesive paste, replacement of the damaged section by a replacement plug, covering the replacement up with a core closing, and finally covering the entire repair section with a double layer-up according to respective specific requirements. For core replacement, a honeycomb core plug may be provided, covered with a scrim cloth, and then coming up with an external doubler. Stepped repair solutions involving the application of core replacement plugs, adhesive pastes, and certain repair materials as lay-ups according to respective specific requirements may also be used. Alternatively, aluminium doublers may be used for temporarily covering up the damaged section.

Repair methods, as known from the prior art, for repairing sandwich structures, do not fully satisfy in that they are time consuming and involve high efforts. For permanent repair, the sandwich structures have to be removed from the vehicles in order to be taken to repair shops, where repairs are often carried out in a customised and thus costly way. Merely cosmetic repairs might be applied on the spot but remain temporary and cannot fully restore required structural properties of the sandwich structures, such as mechanical stability and resistance against water and chemicals.

### Summary

It may thus be seen as an object to reduce efforts for repairs and provide reliable permanent, or at least long-lasting repair solutions for sandwich structures. In other words, it can be seen as an object, to provide an efficient and fast, while at the same time reliable as well as durable way for repairing floor panels of vehicles, preferably on the spot. These objects are at least partly achieved by the subject-matter of the independent claims.

According to an aspect, a method for repairing a sandwich structure, in particular a floor panel in a vehicle, such as an aircraft, is provided, the sandwich structure having a top layer and a bottom layer defining an intermediate space between them which is at least partially filled out with a core material, the method comprising the steps of localizing a damaged section of the sandwich structure, such as a hole in the top layer and the underlying core material; removing the damaged section to create a repair cavity while preserving the bottom layer; filling up the repair cavity with a filling material; covering the filled-up repair cavity with a cover layer; and fixing the cover layer by means of at least one fixing element extending through the cover layer and the filling material and/or the core material next to the filling material.

According to an aspect, a repair kit for repairing a sandwich structure, in particular a floor panel in a vehicle, such as an aircraft, is provided, the sandwich structure having a top layer and a bottom layer defining an intermediate space between them which is at least partially filled out with a core material, wherein the repair kit is configured to carry out a corresponding method, and/or comprises a tool for removing the damaged section to create a repair cavity while preserving the bottom layer, a filling material for filling up the repair cavity, a cover layer for covering the filled-up repair cavity; and/or at least one fixing element for fixing the cover layer, wherein the at least one fixing element is configured to extend through the cover layer and the filling material and/or the core material next to the filling material.

The damaged section can be repaired without the need of removing a part of the sandwich structure containing the damaged section. The repair kit can be kept on the vehicle itself. Special tooling for carrying out the method can thus be provided readily available to conduct repairs as soon as possible, in a failsafe and quick manner.

The proposed solution thus provides an innovative new approach for repairing sandwich structures, in particular floor panels, of vehicles, such as aircrafts. The solution can be particularly advantageous for repairing floor panels in a way that the repairs last at least until the end of a respective cycle for full inspection of the vehicle, where then further repairs and/or replacements of sandwich structures can be carried out on a regular basis, if necessary. This is especially advantageous, since the repair can take place on the spot in a satisfying way.

Further developments can be derived from the dependent claims and from the following description. Features described with reference to devices and arrangements may be implemented as method steps, or vice versa. Therefore, the description provided in the context of the repair kit and its components applies in an analogous manner also to respective method steps. In particular, the functions of the repair kit and its components may be implemented as method steps of the method and the method steps may be implemented as functions and/or elements of the repair kit and its components.

According to an embodiment of a method, the step of removing involves using a core drill selected according to a maximal diameter of the damaged section. The core drill can be selected from a set of core drills. This has the advantage that the damaged section may be precisely removed in a customised way without removing undue amounts of the sandwich structure. Furthermore, the respective core drill allows for cutting out the damaged section in a fast and efficient, while at the same time clean and easy way.

According to an embodiment of a method, the filling material is provided as a foam. The foam can expand to fill out the repair cavity and then cure. Thereby, the repair cavity can be filled out in a fast and efficient, while at the same time clean and easy way.

According to an embodiment of a method, wherein the cover layer is provided with prefabricated through-holes for receiving the at least one fixing means. Thereby, on the one hand, the cover layer is readily available. On the other hand, the prefabricated through-holes allow for precisely applying the at least one fixing element. This further helps in providing a fast and efficient, at the same time clean and easy way for repairs of sandwich structures.

According to an embodiment of a method, the method further comprises the step of placing a sealing layer below the cover layer. The sealing layer helps in sealing up the repair cavity and keeping the filling material in place within the repair cavity. This further helps in enhancing practicability and cleanliness of the repair method.

According to an embodiment of a method, further comprises the step of drilling at least one drill hole for receiving the at least one fixing element. By drilling the at least one drill hole, the fixing element can be precisely placed for fixing the cover layer in a desired location. This helps in further improving adaptability and/or customisability of the repairs.

According to an embodiment of a method, wherein a drilling tool for drilling the drill hole is guided by a guiding element supported and/or provided at the cover layer. The guiding element may be provided at a guiding tool supported at the cover layer and/or centred in the at least one trough hole. Alternatively, or additionally, the guiding element can be supported and/or provided at the cover layer in the form of a template, and/or may use the cover layer, for example, the pre-fabricated drill holes, provided therein, as a template. This further helps in providing a fast and efficient, at the same time clean and easy way for repairs of sandwich structures.

According to an embodiment of a method, the at least one drill hole is being provided with a circumferential step at a respective predefined depth. The circumferential step may particularly help in supporting any fixing element inserted into the drill hole at the bottom layer, and/or above the bottom layer, preferably without damaging the bottom layer in an unintended way. Thereby, repairing sandwich structures becomes fast and efficient, at the same time clean, structured, and precise, yet easy to implement.

According to an embodiment of a method, the at least one circumferential step is being provided in the top layer and/or in the vicinity of the bottom layer. At the top layer, the circumferential step may help in supporting the at least one fixing element at the top layer. Providing the circumferential step in the vicinity of the bottom layer further helps in in supporting any fixing element inserted into the drill hole at the bottom layer, and/or above the bottom layer, preferably without damaging the bottom layer in an unintended way. Thereby, repairing sandwich structures becomes even more fast and efficient, at the same time clean, structured, and precise, yet easy to implement.

According to an embodiment of a method, the at least one circumferential step is being provided with and/or in the form of a chamfer. The chamfer may help to centre the at least one fixing element in the drill hole. Furthermore, the chamfer allows for countersinking a head and/or upper end section of the at least one fixing element in the through-hole of the cover layer. This helps in further improving precision, reliability, and efficiency of the repair.

According to an embodiment of a method, the at least one fixing element extends through the bottom layer. Thereby, the at least one fixing element may be supported in a vertical and/or horizontal direction at the bottom layer. This helps in further enhancing stability and reliability of the repair.

According to an embodiment of a method, the at least one fixing element is being brought into a positive-fit engagement with the bottom layer. The fixing element can be provided in the form of a fixing pin and/or fixing screw and may have an expanding tip to anchor the fixing element below the bottom layer. This helps in further enhancing stability and reliability of the repair.

According to an embodiment of a method, the filling material is being injected through the at least one fixing element. The fixing element may be provided with an injection channel. Thereby, any remaining gaps, slits, pores, and/or mechanical interfaces between the at least one fixing element, the sandwich structure, and/or the filling material may be sealed-up and closed. The filling material may thereby additionally glue the components together and provide a gap free, compact repair solution. This helps in even further enhancing stability and reliability of the repair.

According to an embodiment of a repair kit, further comprises a set of core drills having different diameters, a set of cover layers having different square measures, a stock of sealing layer and/or a drilling tool configured to create drill holes for receiving the at least one fixing element. The core drill, the cover layer, the sealing layer, and/or the drilling tool may be selected from the repair kit as desired and/or required for repairing any damage according to individual demands. This helps in providing a fast and most efficient way of conducting repairs in an easy and reliable, reproducible way, and in further improving adaptability and/or customisability of the repairs.

### Brief Description of the Drawings

The subject matter will hereinafter be described in conjunction with the following drawing figures, wherein like numerals denote like elements, and wherein:
Fig. 1 is a schematic side view of a vehicle in the form of an aircraft.
Fig. 2 is a schematic-sectional view of a fuselage of the aircraft shown in Fig. 1 along the cross-sectional line A-A depicted therein.
Fig. 3 is a schematic perspective partially sectioned view of a sandwich structure, such as a floor panel, for the vehicle.
Fig. 4 is a schematic perspective side view of the sandwich structure shown in Fig. 3.
Fig. 5 is a schematic cross-sectional view of the sandwich structure shown in Fig. 3 along a cross-sectional line A-A depicted in Fig. 1, in a damaged state.
Fig. 6 is a schematic cross-sectional view of the sandwich structure shown in Fig. 3, wherein a damaged section has been removed.
Fig. 7 is a schematic cross-sectional view of the sandwich structure shown in Fig. 6, wherein the repair cavity has been filled.
Fig. 8 is a schematic cross-sectional view of the sandwich structure shown in Fig. 7, wherein a sealing layer and a cover layer have been applied.
Fig. 9 is a schematic cross-sectional view of the sandwich structure shown in Fig. 8, wherein drill holes are being drilled.
Fig. 10 is a schematic cross-sectional view of the sandwich structure shown in Fig. 9 with drill holes.
Fig. 11 is a schematic cross-sectional view of a fixing element in the form of a fixing screw along a longitudinal centre axis of the fixing element.
Fig. 12 is a schematic cross-sectional view of the fixing element shown in Fig. 11 being inserted into one of the drill holes.
Fig. 13 is a schematic cross-sectional view of the fixing element shown in Figs. 11 and 12 in a fully inserted state.
Fig. 14 is a schematic cross-sectional view of the fixing element shown in Figs. 11 to 13 in the fully inserted state and filled up with the filling material.
Fig. 15 is a schematic cross-sectional view of a fixing element in the form of a fixing pin along a longitudinal centre axis of the fixing element.
Fig. 16 is a schematic cross-sectional view of the fixing element shown in Fig. 15 in a fully inserted state.
Fig. 17 is a schematic cross-sectional view of the fixing element shown in Figs. 15 and 16 in the fully inserted state and with fixing head of the fixing element in an expanded state filled up with the filling material.
Fig. 18 is a schematic cross-sectional view of the fixing element shown in Figs. 15 to 17 in the fully inserted state, expanded state and filled up with the filling material.
Fig. 19 is a schematic cross-sectional view of the fixing element shown in a detail XVI indicated in Fig. 15 in the fully inserted state.
Fig. 20 is a schematic cross-sectional view of the fixing element shown in a detail XVI indicated in Fig. 15 in the fully inserted and expanded state.
Fig. 21 is a schematic cross-sectional view in a projection along a longitudinal centre axis of another embodiment of the fixing element with expandable fixation wings.
Fig. 22 is a schematic illustration of a repair kit.
Fig. 23 is a schematic illustration of steps of a method.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

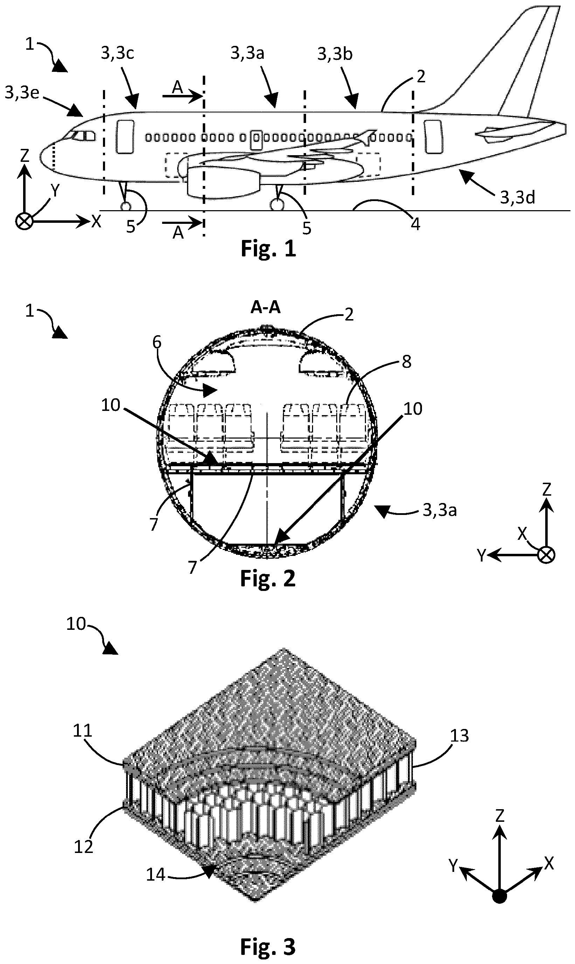

Fig. 1 shows a schematic side view of a vehicle 1, for example, in the form of an aircraft comprising a support structure 2 in the form of a fuselage having several support structure sections 3, joined together. For example, the support structure sections 3 comprise a first section 3a, a second section 3b, a third section 3c, a fourth section 3d, and/or a fifth section 3e. The first section 3a may be a centre section of the support structure 2. The second section 3b may be an after section of the support structure 2. The third section 3c may be a front section of the support structure 2. The fourth section 3d may be a tail section of the support structure 2. The fifth section 3e may be a nose section of the support structure 2.

The support structure 2 may rest on a ground 4 by means of a landing gear 5 and may surround an interior space 6 accommodating a mounting structure 7 mounted to the support structure 2 (see Fig. 2). The mounting structure may hold loads 8, such as seats for passengers, and may be at least partly covered by means of sandwich structures 10, such as floor panels (see Fig. 2). The vehicle 1 and thus, above 5 mentioned components thereof, extend in a longitudinal direction X, a transverse direction Y, and a height direction Z, together forming a Cartesian coordinate system.

Fig. 2 shows a schematic-sectional view of the support structure 2 of the vehicle 1 shown in Fig. 1 along the cross-sectional line A-A depicted therein. Here it becomes apparent that the mounting structure 7 is mounted to the support structure 2. The Sandwich structure 10 rests on the mounting structure 10.

Fig. 3 shows a schematic perspective partially sectioned view of the sandwich structure 10, such as a floor panel, of the vehicle 1. The sandwich structure 10 comprises a top layer 11, a bottom layer 12 and a core material 13 which at least partially fills out an intermediate space 14 of the sandwich structure 10 provided between the top layer 11 and the bottom layer 12. The top layer 11 and/or the bottom layer 12 may be formed of sheet material, such as carbon fibre sheets and/or layers. The core material 13 may be formed as a honeycomb structure, for example, made of impregnated paper and/or cardboard.

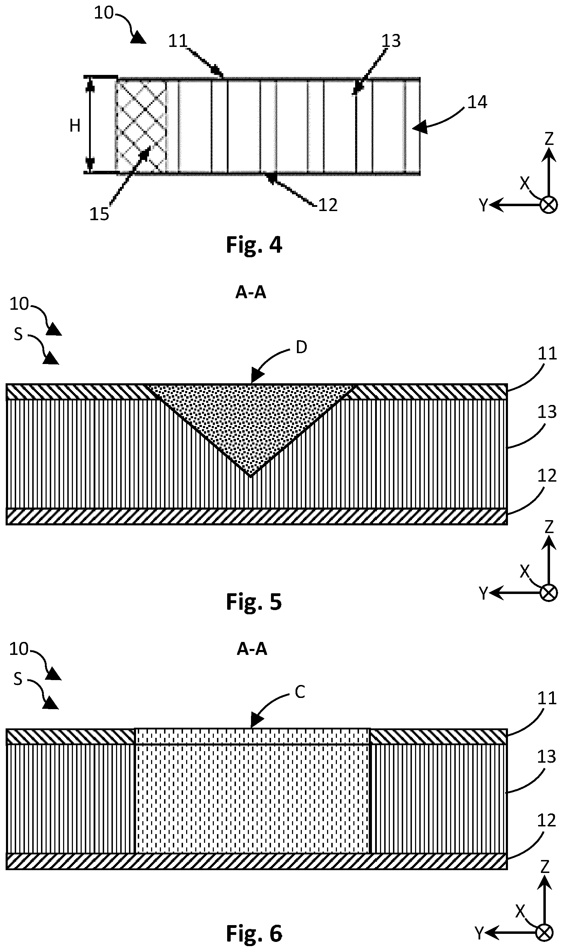

Fig. 4 shows a schematic perspective side view of the sandwich structure 10 shown in Fig. 3. Here it is illustrated that besides the core material 13, the sandwich structure may comprise any kind of filler material 15 which can be received within the intermediate space 14 along with the core material 13. For example, the filler material 15 may include epoxy resin, or alike. Furthermore, it becomes apparent in Fig. 4, that the sandwich structure 10 may have an overall height H measured in parallel to the height direction Z. The overall height H may amount to about 9.5 mm, of which, for example, the top layer 11 and the bottom layer 12, may each take up around 1 mm, while the intermediate space 14 and thus the core material 13 and/or filler material 15 may take up around 8.5 mm.

Fig. 5 shows a schematic cross-sectional view of the sandwich structure 10 shown in Fig. 3 along a cross-sectional line A-A depicted in Fig 1, in a damaged state S with the damaged section D, for example an indentation, extending through the top layer 11 into the core layer 13 in a direction opposite to the height direction Z.

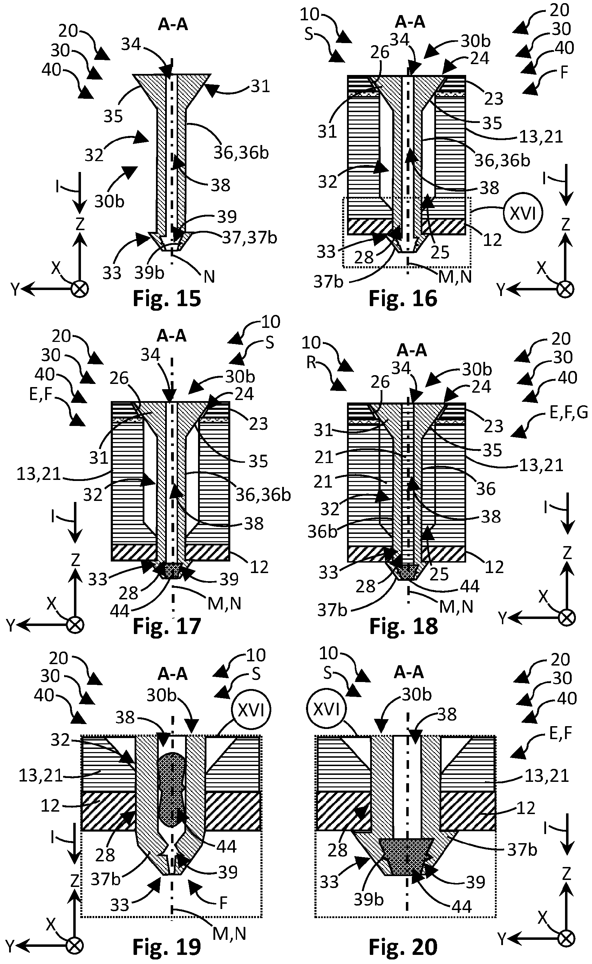

Fig. 6 shows a schematic cross-sectional view of the sandwich structure shown in Fig. 3, wherein a damaged section D has been removed and thus a repair cavity C is formed. For example, the repair cavity C can be formed by means of a core drill (see Fig. 19). Hence, the repair cavity C may have an essentially cylindrical shape and may preferably extend essentially opposite to the height direction Z down to the bottom layer 12, and/or down to the vicinity of the bottom layer 12, such that the entire damaged section D is reliably removed.

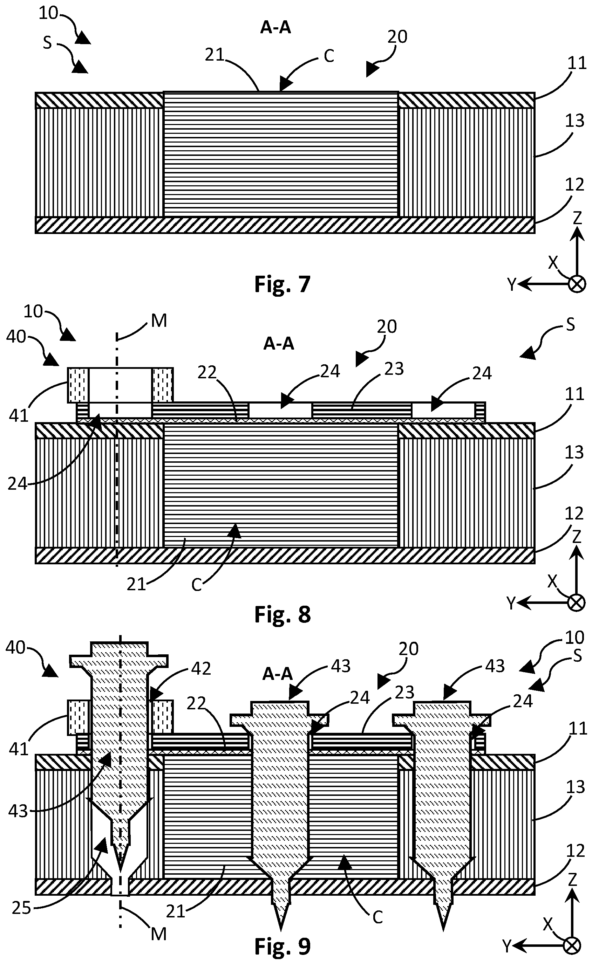

Fig. 7 shows a schematic cross-sectional view of the sandwich structure 10 shown in Fig. 6, wherein the repair cavity C has been filled for building up a repair structure 20 for repairing the sandwich structure 10. A filling material 21 fills up the repair cavity C. The filling material 21 may be provided, for example, as an expanding foam, or alike, which cures and thus hardens after a desired timeframe.

Fig. 8 shows a schematic cross-sectional view of the sandwich structure 10 shown in Fig. 7, wherein a sealing layer 22 and a cover layer 23 of the support structure 20 have been applied. The sealing layer 22 can be placed directly on top of the filling material 21, preferably overlapping with the remaining top layer 11. The cover layer 23 can be placed above the sealing layer 22. The cover layer 23 may be provided with through-holes 24.

A repair kit 40 for repairing the sandwich structure 10 may comprise a guiding tool 41 providing a guiding path 42, for example, in the form of a passage, which can be conveniently aligned with the top layer 11 and/or the cover layer 23 for guiding a drilling tool 43 (see Fig. 9). For example, the guiding path 32 and a respective through-hole 24 of the cover layer 23 may have a common middle axis M. In order to align the middle axes M of the through-hole 24 and the guiding path 42, respectively, the guiding tool 43 may be centred at the through-hole 24.

Fig. 9 shows a schematic cross-sectional view of the sandwich structure 10 shown in Fig. 8, wherein drill holes 25 of the repair structure 20 are being drilled. The drill holes 25 can be drilled by drilling tools 43 of the repair kit 40. The drilling tools 43 may be aligned with the middle axis M of the through-hole 24 and/or the guiding path 42. The drill holes 25 may extend through the entire sandwich structure 10 and repair structure 20, and essentially in parallel to the height direction Z.

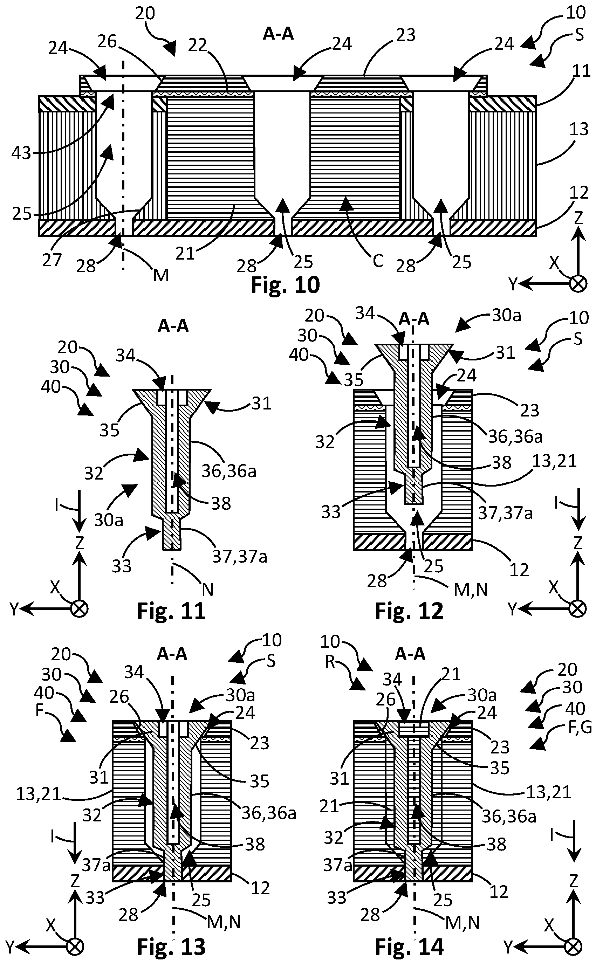

Fig. 10 shows a schematic a schematic cross-sectional view of the sandwich structure 10 shown in Fig. 9 with the drill holes 25 which may comprise the full-holes 24 as they may have been at least partially shaped by the drilling process. For example, one of the drill holes 25 extends through the filling material 21 placed in the repair cavity C, while two additional ones of the drill holes 25 are arranged next to the repair cavity C in a distance therefrom measured in parallel to the transverse direction Y. Each of the drill holes 25 can share a middle axis M with the respective through-hole 25 and in the cover layer 23, and can be provided with a first circumferential step 26, for example in the form of a chamfer, in the region of the through-hole 24, and/or with a second circumferential step 27, which may be formed as a chamfer as well, in the region or at least in the vicinity of an extension 28 of the drill hole 26 extending through the bottom layer.

Fig. 11 shows a schematic cross-sectional view of a fixing element 30 in the form of a fixing screw 30a along a longitudinal centre axis N of the fixing element 30. For example, the fixing element 30 is provided in the form of a fixing screw 30a. The fixing element 30 may comprise a head 31, a shaft 32, and/or distal process 33 protruding from the shaft 32 in a direction opposite to the height direction Z. The head 31 can be provided with a tool socket 34 and/or with a bevel 35.

The shaft 32 can be provided with a first positive-fit element 36, for example, in the form of a first thread 36a. The distal process 33 can be provided with a second positive fit-element 37, for example in the form of a second thread 37b. An injection channel 38 may extend centrally through the shaft 32, essentially in parallel to the central axis N. The injection channel 38 may be connected to the tool socket 34, such that the connection channel 38 extends from the tool socket 34 in parallel to an insertion direction I of the fixing element 30 extending essentially in parallel and opposite to the height direction Z.

Fig. 12 shows a schematic cross-sectional view of the fixing element 30 shown in Fig. 11 being inserted into one of the drill holes 25. The fixing element 30 is being inserted into the drill hole 25 along insertion direction I, possibly under a rotational movement around the centre axis N, for example, while the first thread 36a engages the side walls of the drill hole 25 in the region of the core material 13 and/or the filling material 21, and/or while the second thread 37b engages the sidewalls of the drill hole 25 provided by the bottom layer 12 in the region of the extension 38 of the drill hole 25. The centre axis N of the fixing element 30 may be aligned with the middle axis M of the drill hole 25.

Fig. 13 shows a schematic cross-sectional view of the fixing element 30 in the form of the fixing screw 30a shown in Figs. 11 and 12 in a fully inserted state F. Here, the head 31 may be seated in the through-hole 24 and/or the drill hole 25, such that the bevel 35 lies flush with the first circumferential step 26 in the form of the chamfer. Thus, the head 31 may complement the drill hole 25 in the region of the cover layer 11.

In the fully inserted state F of the fixing element 30, the shaft 32 may sit within the drill hole 25 in the region of the core material 13 and/or the filling material 21. The first positive-fit element 36 may be positive-fit engagement with the core material 13 and/or the filling material 21. The distal process 33 may sit in the extension 28. The second positive-fit element 37 may be a positive-fit engagement with the bottom layer 12.

Fig. 14 shows a schematic cross-sectional view of the fixing element shown in Figs. 11 to 13 in the fully inserted state F and filled up with an additional amount of the filling material 21. The additional amount of the filling material 21 can be injected into the injection channel 38 from above, i.e., insertion direction I. For example, the additional filling material 21 can be injected through the tool socket 34 into the injection channel 38.

The filling material 21 can thus fill out the tool socket 34, the injection channel 38 and/or any remaining gaps or cavities between the fixing element 30 and remaining parts of the repair structure 20, in particular the through-hole 24 and/or the drill hole 25. Consequently, the fixing element 30 and/or the repair structure 20 is in the filled-up state G. The sandwich structure 10 can be regarded as being in a repaired state R.

Fig. 15 shows a schematic cross-sectional view of the fixing element 30 in the form of a fixing pin 30b along the longitudinal centre axis C of the fixing element 30. In contrast, to the fixing element 30 in the form of a fixing screw 30b illustrated in Figs. 11 to 14, the fixing pin 30b has a tool socket 34 which may be regarded as an upper end section of the injection channel 38. The first positive fit element 36 of the fixing pin 30b may be provided as a first engagement element 36b, such as a circumferential tapering relative to the head 31 and/or the second positive-fit element 37.

The second positive fit element 37 may be formed as a second engagement element 37b, for example as a fixing head, or alike, e.g., with a trapezoid cross-section. Within the second engagement element 37b, a receptacle 39, such as a cave or cavity, may be formed which may have a trapezoid cross-section as well. The receptacle 39 may be provided with a latching element 39b, such as a circumferential groove extending along the inner circumference of the receptacle 39.

Fig. 16 shows a schematic cross-sectional view of the fixing element 30 in the form of the fixing pin 30a shown in Fig. 15 in the fully inserted state F. Here it becomes apparent, that in the fully inserted state F of the fixing pin 30a, the shaft 32 extends through the drill hole 25 including the extension 28 thereof essentially in a straight manner in parallel to the insertion direction I along the entire first engagement element 37a. The second engagement element 37b juts below the bottom layer 12. Consequently, the second engagement element 37b may abut the bottom layer 12 from below.

Fig. 17 shows a schematic cross-sectional view of the fixing element shown in Figs. 15 and 16 in the fully inserted state F and with the second engagement element 37b in the form of the fixing head of the fixing element 30 in an expanded state E. In the expanded state E, a spreading tool 44 is inserted into the receptacle 39. The spreading tool 44 maybe shaped complementary to the receptacle 39. A counter latching element (not shown), for example, in the form of a circumferential bead and/or the form of a tongue and/or key may be provided at the spreading tool 44, in order to latch the spreading tool 44 within the receptacle 39 by means of a positive fit engagement between them. In the expanded state E, the second engagement element 37b in the form of the fixing head may be expanded and/or spread in such a way, that the fixing pin 30a is held behind the bottom layer 12 and can thus withstand forces acting upon the fixing pin 30a in a direction opposite to the insertion direction I.

Fig. 18 shows a schematic cross-sectional view of the fixing element 30 shown in Figs. 15 to 17 in the fully inserted state F, expanded state E and filled up with the filling material, hence being in the field-upstate G. Again, as shown in Fig. 14, the filling material 3 can fill out the tool socket 34, the injection channel 38 and/or any remaining gaps or cavities between the fixing element 30 and remaining parts of the repair structure 20, in particular the through-hole 24 and/or the drill hole 25. The sandwich structure 10 is thus in the repaired state R. The spreading tool 44 may seal up the injection channel 38 from below, such that the additional filling material 28 may not leak from the injection channel 38.

Fig. 19 shows a schematic cross-sectional view of the fixing element 30 illustrated in a detail XVI indicated in Fig. 15 in the fully inserted state F. Here it becomes apparent how the spreading tool 44 can be inserted into the distal process 33 through the injection channel 38 in the insertion direction I. During insertion through the injection channel 38, the spreading tool 44 can be compressed such that it is elastically deformed and thus radially squeezed with respect to the centre axis N and/or elongated in the insertion direction I.

Before the spreading tool 44 is being inserted into the receptacle 39, an outer diameter of the distal process 33 can be essentially the same and/or smaller diameter of the shaft 32 measured in a plane extending essentially in parallel with the longitudinal direction X and the transverse direction Y, i.e., extending radially around the insertion direction I. Thereby, the distal process 33 can travel through the extension 28 of the drill hole 25 formed in the bottom layer 12 without damaging the bottom layer 12, i.e. by ripping it apart. In other words, the second engagement element 37b can be retracted in a manner that it does not engage the bottom layer 12.

Fig. 20 shows a schematic cross-sectional view of the fixing element shown 30 illustrated in the detail XVI indicated in Fig. 15 in the fully inserted state F and in the expanded state F. Here it becomes apparent, that upon insertion of the spreading tool 44 into the receptacle 39 formed in the distal process 33, the second engagement element 37b expands. The distal process 33 is being spread open by the spreading tool 44 which now sits within the receptacle 33 and can be latched therein by means of the latching element 39b. Hence, an outer diameter of the distal process 33 is larger than an inner diameter of the extension 28 of the drill hole 25, thus spreading, forming and/or providing the second engagement element 37b which can take the form of and/or be provided with a rim, edge and/or lug arranged at and/or constituting an outer circumference of the distal process 33 locking behind the bottom layer 12 to secure the fixing element 30 in the fully inserted state F such that it cannot be withdrawn from the drill hole 25 opposite to the insertion direction I.

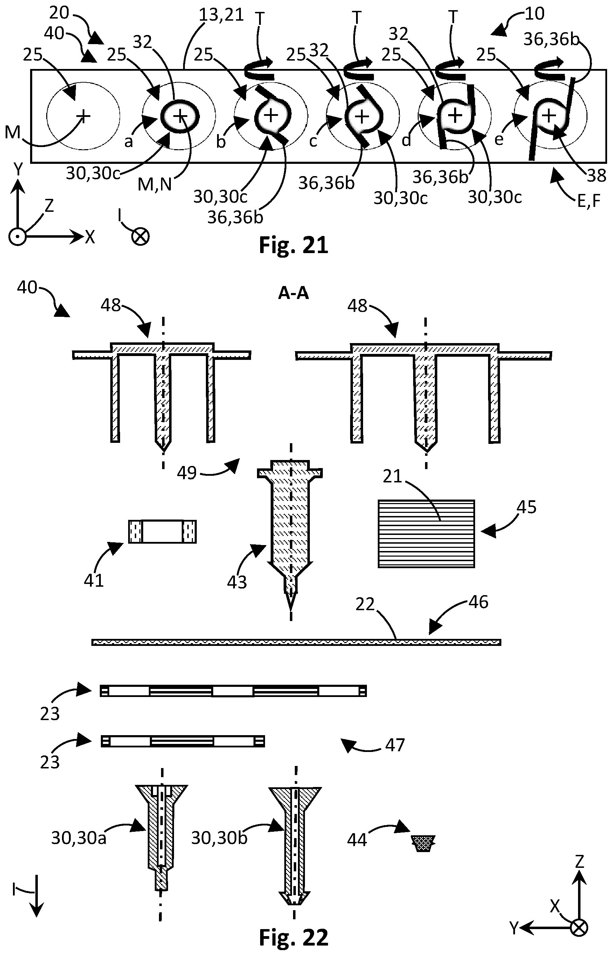

Fig. 21 shows a schematic cross-sectional view in a projection along the middle axis M of through-holes 24, drill holes 25, and/or the longitudinal centre axis N of another embodiment of the fixing element 30, respectively, configured as an anchoring pin 30c having at least one first positive-fit element 36 provided as an anchoring element 36c in the form of expandable fixation wings. As illustrated, the anchoring pin 30c may have a shaft 32 that can have a round and/or oval cross-section, and may be provided with anchoring elements 36c which can be expanded when turning, i.e., rotating the anchoring pin 30c in a turning direction T around the centre axis N. For example, the anchoring elements 36c may be expanded in by the rotation to reach their respective expansion positions a to e.

In an unexpanded position a, the anchoring elements 36c may be retracted and/or embedded within the shaft 32 in such a way that they do not extend laterally therefrom. In a slightly expanded position b, the anchoring elements 36c may slightly protrude laterally from the shaft 32. In an expanded position c, the anchoring elements 30c may laterally protrude from the shaft 32 in such way, that they may get in physical contact with, or at least be located in the vicinity of the wall of the drill hole 25.

In a further expanded position d, the anchoring elements 30c may at least partially engage the wall of the drill hole 25 to create a traction, force fit and/or positive-fit between the anchoring pin 30c and the core material 13 and/or filling material 21. In a fully expanded position e, and thus in the expanded state E and/or fully inserted state F of the anchoring pin 30c, the anchoring elements 36c may engage the walls of the drill hole 25 in such a way that the anchoring pin 30c is securely anchored within the core material 13 and/or filling material 21 by traction, force fit and/or positive-fit. The injection channel 38 may now be filled up with filling material 21 in order to bring the repair structure 20 into the fill-up state G and thus the sandwich structure 10 into the repaired state R.

The anchoring elements 36c a can be configured such that they expand when the anchoring pin 30c is being rotated within the through-hole 24 in the turning direction T around the centre axis N. This can be achieved, for example, in providing the fixing element 30 with at least two different sections arranged above each other in the insertion direction I such that they are rotatable with respect to each other at least to a certain extent in order to allow an expansion mechanism (not shown) of the fixing element 30 to expand the anchoring elements 36. For example, the second positive fit element 37 may be configured such that upon reaching the fully inserted state F, it can remain in a fixed position while the shaft 33 can be further rotated with respect to the second engagement element 37, thus allowing to expand the anchoring elements 36c until they create the desired engagement effect with the walls of the drill hole 25.

While the anchoring elements 36c providing the first positive-fit element 36 engage the core material 13 and/or filling material 21 by traction, force fit and/or positive-fit. The fixing element 30 in the form of an anchoring pin 30c may be additionally secured in the fully inserted state F in that the head 31 engages the top layer 11 and/or cover layer 23, while alternatively and/or additionally, the second positive fit element 37 engages the bottom layer 12 by traction, force fit and/or positive-fit. As another alternative and/or additional configuration, the anchoring elements 36c may engage the bottom layer 12 by traction, force fit and/or positive-fit. The anchoring elements 36c may be formed, shaped, and/or configured such that they bend under pressure and/or rotation and relax when having sufficient free space, respectively.

Fig. 22 shows a schematic illustration of the repair kit 40, comprising the guiding tool 41, the drilling tool 43, and/or the spreading tool 44. The repair kit 40 may further comprise at least one of the fixing elements 30, for example, in the form of the fixing screw 30a, the fixing pin 30b, and/or the anchoring pin 30c (see Fig. 19). The repair kit 40 may further comprise a certain amount and/or reservoir of filling material 21, for example, a dispensing device 45 for dispensing the filling material 21. The repair kit 40 may further comprise a certain stock 46 of the sealing layer 22. The repair kit 40 may further comprise at least one of the cover layers 23, for example, a layer set 47 of cover layers 23 having different sizes.

The repair kit 40 may further comprise at least one tool for removing the damaged section D to create the repair cavity V, preferably while preserving the bottom layer 12. Such a tool may be provided in the form of a core drill 48, for example, as a drill set 49 which may comprise at least two core drills 48 of different sizes, such as different heights measured essentially in parallel to the height direction Z, and/or different diameters measured essentially in parallel to the transverse direction Y, in order to choose an appropriately sized core drill 48 for precisely removing the damaged section D. The repair kit 40 and its above-mentioned components may be provided in a case and/or toolbox (not shown) in order to be readily available on the spot.

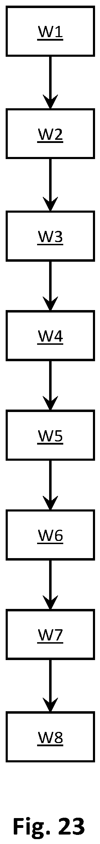

Fig. 23 shows a schematic illustration of steps W of a method, which may be conceived as working steps. In a first step W1, the damaged section D has to be localised. In a second step W2, the damaged section D is being removed, creating the repair cavity C. In a third step W3, the repair cavity C is being filled up with the filling material 21. In a fourth step W4, the sealing layer 22 may be applied. In a fifth step W5, the cover layer is placed. In a sixth step W6, the drill holes 25 can be drilled. In a seventh step W7, at least one fixing element 30 may be applied. In an eighths step W8, additional filling material 21 may be injected into the fixing element 30.

### List of Reference Signs

- 1: vehicle/ aircraft
- 2: support structure / fuselage
- 3: section
- 3a-e: first to fifth section
- 4: ground
- 5: landing gear
- 6: interior space
- 7: mounting structure
- 8: load

- 10: sandwich structure
- 11: top layer
- 12: bottom layer
- 13: core material
- 14: intermediate space
- 15: filler material

- 20: repair structure
- 21: filling material
- 22: sealing layer
- 23: cover layer
- 24: through-hole
- 25: drill hole
- 26: first circumferential step
- 27: second circumferential step
- 28: extension
- 30: fixing element
- 30a: fixing screw
- 30b: fixing pin
- 30c: anchoring pin
- 31: head
- 32: shaft
- 33: distal process
- 34: tool socket
- 35: bevel
- 36: first positive-fit element
- 36a: first thread
- 36b: first engagement element
- 36c: anchoring element
- 37: second positive fit element
- 37a: second thread
- 37b: second engagement element
- 38: injection channel
- 39: receptacle
- 39b: latching element
- 40: repair kit
- 41: guiding tool
- 42: guiding passage
- 43: drilling tool
- 44: spreading tool
- 45: dispensing device
- 46: sealing layer stock
- 47: layer set
- 48: core drill
- 49: drill set

- a: unexpanded position
- b: slightly expanded position
- c: expanded position
- d: further expanded position
- e: fully expanded position

- C: repair cavity
- D: damaged section
- E: expanded state
- F: fully inserted state
- G: filled-up state
- H: height
- I: insertion direction
- M: middle axis
- N: centre axis
- R: repaired state
- S: damaged state
- W: working step
- X: longitudinal direction
- Y: transverse direction
- Z: height direction

- W1: localise damage
- W2: remove damage
- W3: fill cavity
- W4: seal filling material
- W5: place cover layer
- W6: drill holes
- W7: apply fixing element
- W8: fill channel

## Claims

1. Method for repairing a sandwich structure (10), in particular a floor panel in a vehicle (1), such as an aircraft, the sandwich structure (10) having a top layer (11) and a bottom layer (12) defining an intermediate space (14) between them which is at least partially filled out with a core material (13), the method comprising the steps of
localizing a damaged section (D) of the sandwich structure (10), such as a hole in the top layer (11) and the underlying core material (13);
removing the damaged section (D) to create a repair cavity (C) while preserving the bottom layer (12);
filling up the repair cavity (C) with a filling material (21);
covering the filled-up repair cavity (C) with a cover layer (23); and
fixing the cover layer (23) by means of at least one fixing element (30) extending through the cover layer (23) and the filling material (21) and/or the core material (13) next to the filling material (21).

2. Method according to claim 1, wherein the step of removing involves using a core drill (48) selected according to a maximal diameter of the damaged section (D).

3. Method according to claim 1 or 2, wherein the filling material (21) is provided as a foam.

4. Method according to at least one of claims 1 to 3, wherein the cover layer (23) is provided with prefabricated through-holes (24) for receiving the at least one fixing element (30).

5. Method according to at least one of claims 1 to 4, further comprising the step of placing a sealing layer (22) below the cover layer (23).

6. Method according to at least one of claims 1 to 5, further comprising the step of drilling at least one drill hole (25) for receiving the at least one fixing element (30)

7. Method to claim 6, wherein a drilling tool (43) for drilling the drill hole (25) is guided by a guiding tool (41) supported and/or provided at the cover layer (23)

8. Method according to claim 6 or 7, wherein the at least one drill hole (25) is being provided with a circumferential step (26, 27) at a respective predefined depth.

9. Method according to claim 8, wherein the at least one circumferential step (26, 27) is being provided in the top layer and/or in the vicinity of the bottom layer (12).

10. Method according to claim 8 or 9, wherein the at least one circumferential step (26, 27) is being provided with and/or in the form of a chamfer.

11. Method according to at least one of claims 1 to 10, wherein the at least one fixing element (30) extends through the bottom layer (12).

12. Method according to at least one of claims 1 to 11, wherein the at least one fixing element (30) is being brought into a positive-fit engagement with the bottom layer (12).

13. Method according to at least one of claims 1 to 11, wherein the filling material (21) is being injected through the at least one fixing element (30).

14. Repair kit (40) for repairing a sandwich structure (10), in particular a floor panel in a vehicle (1), such as an aircraft, the sandwich structure (10) having a top layer (11) and a bottom layer (12) defining an intermediate space (14) between them which is at least partially filled out with a core material (13), wherein the repair kit (40) is configured to carry out a method according to at least one of claims 1 to 13, and/or comprises a tool for removing the damaged section (D) to create a repair cavity (C) while preserving the bottom layer (12), a filling material for filling up the repair cavity (C), a cover layer for covering the filled-up repair cavity (C); and/or at least one fixing element (30) for fixing the cover layer (23), wherein the at least one fixing element (30) is configured to extend through the cover layer (23) and the filling material (21) and/or the core material (13) next to the filling material.

15. Repair kit according to claim 14, further comprising a set of core drills (48) having different diameters, a set of cover layers (23) having different square measures, a stock of sealing layer (22) and/or a drilling tool (43) configured to create drill holes (25) for receiving the at least one fixing element (30).
